# EUROPEAN PATENT SPECIFICATION

(11) **EP 3 623 430 B1**
(45) Date of publication and mention of the grant of the patent: **30.04.2025**
(21) Application number: 19196662.1
(22) Date of filing: 11.09.2019
(51) Int. Cl.: C09D 5/02, C09D 7/42, C09D 7/61, C09D 7/63, C09D 133/06

(54) **COMPOSITION**
ZUSAMMENSETZUNG
COMPOSITION

(30) Priority: 12.09.2018 EP 18194062
(43) Date of publication of application: 18.03.2020
(73) Proprietor: Jotun A/S, 3202 Sandefjord (NO)
(72) Inventor: MARSTOKK, Olav, 3209 Sandefjord (NO); AAS, Astrid Lydvo, 3209 Sandefjord (NO); FJELDE, Sigve, 3209 Sandefjord (NO)
(74) Representative: Marks & Clerk LLP

(56) References cited:
- EP-A1- 3 502 196
- EP-A2- 0 700 976
- WO-A1-03/106574
- WO-A1-2008/152078
- GB-A- 1 501 437

## Description

### INTRODUCTION

The present invention relates to a coating composition comprising a (i) poly(meth)acrylate dispersion comprising poly(meth)acrylate polymer particles having an average diameter of 50-400 nm, as determined by ISO 22412:2017, (ii) solid organic filler particles, wherein said solid organic filler particles comprise poly(meth)acrylate, polystyrene, polyacrylamide, polyurethane, polysiloxane, polyolefin, polyacrylonitrile, nylon, poly(vinyl ester), and mixtures thereof, are substantially spherical, and have an average diameter of 10 to 30 µm, as determined by ISO 13320:2009, (iii) pigment, (iv) water, (v) a biocide selected from the group consisting of: in can preservatives, dry film biocides, wood preservatives, or mixtures thereof, and wherein the composition comprises less than 8 wt% inorganic extender, based on the total weight of the composition as well as to methods of preparing such compositions. Advantageously the composition is readily applicable to exterior surfaces, e.g. wood, and provides low gloss or matte coatings with good gloss and colour retention and low dirt pick up. The invention also relates to a container containing the composition. Additionally the invention relates to a method of providing a coating on a surface, wherein the composition herein described is applied to the surface and dried, as well as to a coating on a surface per se.

### BACKGROUND

Exterior paints are subject to degradation by UV/VIS radiation as well as water. Exterior paints are required to be significantly more UV/VIS and water resistant than interior paints.

Durable coatings are, however, desired by end users in order to maximise the period of time a coating lasts for before it needs to be renewed. Ideal coatings should have a desirable gloss level, good gloss retention, good colour retention and low dirt pick up. Coatings with good gloss retention make the surface look newly painted for a longer time and coatings with consistent gloss levels, regardless of the viewing angle, are particularly desirable. With white coatings, colour change may be due to dirt pick up as well as UV/VIS degradation whereas with other coloured coatings, colour change is primarily due to UV/VIS degradation. Dirt pick up needs to be minimised to ensure coatings, and especially white coatings, continue to look fresh over their lifetime.

The conventional approach to improving gloss and colour retention is to employ a binder with improved UV resistance and/or to add UV absorbers and hindered amine light stabilisers (HALS). The use of UV absorbers and HALS, however, has drawbacks. They are expensive and they often contribute to the tackiness of the final coating which lengthens drying times and exacerbates the problem of dirt pick up. UV absorbers and HALS can also leach out of the coating film which leads to reduced coating life time.

As mentioned above, end users expect to be able to select coating compositions which give coatings with a desirable gloss level. Examples of gloss levels are high gloss, semi-gloss and matte. Currently end users tend to want semi-gloss or matte coatings which are characterised by having a gloss level of less than 60 at an angle of 60° as determined by NS EN ISO 2813. The gloss level of a coating composition is conventionally reduced by adding inorganic extender to the composition. Examples of inorganic extenders used for this purpose include silica, barium sulphate, calcium carbonate, nepheline syenite, dolomite, feldspar, mica, wollastonite, talc, leukophyllite, aluminium oxide, aluminium trihydroxide and diatomaceous earth. These inorganic extenders are popular as they reduce gloss level, increase the bulk of the composition and have a low cost.

Lowering of gloss level by the addition of inorganic extender does, however, cause some problems. The inorganic extenders tend to reduce the durability of the coatings produced with the coating compositions. Thus the inorganic extenders tend, for example, to reduce gloss retention and to increase dirt pick up of the coatings. The gloss level from different angles will also be different which is undesirable.

WO03/106574 describes coating compositions comprising a liquid binder resin, polyvinyl chloride extender particles having an average particle size in a range from 5 to 150 microns and pigment. WO03/106574 discloses that using polyvinyl chloride particles in a certain size range instead of inorganic extenders, improves the burnish and mar resistance of flat deep colour paints as well as improving the scrub resistance and washability of such paints. The polyvinyl chloride extenders are described as being solid and generally spherical, with an average particle size in the range 20-80 microns. This is to ensure that the particles protrude above the binder surface and reduce the sheen of the paint and protect the film from burnishing elements. Polyvinyl chloride is, however, light and heat sensitive and is therefore prone to degradation when used in paints designed for exterior use.

EP 0 700 976 A2 relates to an aqueous paint composition comprising an aqueous emulsion of a film-forming first organic polymer and a composite pigment comprising a structured composite of inorganic pigmentary particles and particles of a second organic polymer, said second organic polymer being a non-film-forming polymer, wherein said aqueous paint composition has a particulate volume concentration greater than 55 per cent.

GB 1 501 437 A relates to a paint composition comprising a dispersion in a liquid paint vehicle of pigment and polymer beads. The polymer beads fall within two distinct size ranges, the first having diameters from 2 to 10 micron and the second from 10 to 40 micron.

WO 2008/152078 A1 relates to aqueous binder compositions obtainable by emulsion polymerization of at least one C₁₋₁₀-alkyl(meth)acrylate and/or a vinyl aromatic compound having up to 20 carbon atoms. The document also relates to the use of the binder in coating materials.

EP 3 502 196 A1 relates to a matte coating composition comprising an aqueous dispersion of a) polymer particles having an average particle size in the range of from 80 nm to 500 nm; b) polymeric organic crosslinked microspheres having a particle size in the range of from 1 µm to 20 µm; c) polyethylene wax particles having a particle size in the range of from 0.3 µm to 30 µm; and d) a rheology modifier.

### SUMMARY OF THE INVENTION

Viewed from a first aspect, the present invention provides a coating composition comprising:
(i) a poly(meth)acrylate dispersion comprising poly(meth)acrylate polymer particles having an average diameter of 50-400 nm, as determined by ISO 22412:2017;
(ii) solid organic filler particles, wherein said solid organic filler particles comprise poly(meth)acrylate, polystyrene, polyacrylamide, polyurethane, polysiloxane, polyolefin, polyacrylonitrile, nylon, poly(vinyl ester), and mixtures thereof, are substantially spherical, and have an average diameter of 10 to 30 µm, as determined by ISO 13320:2009;
(iii) pigment;
(iv) water; and
(v) a biocide selected from the group consisting of: in can preservatives, dry film biocides, wood preservatives, or mixtures thereof,
wherein said composition comprises less than 8 wt% inorganic extender, based on the total weight of the composition.

Viewed from a further aspect, the present invention provides a method for preparing a composition as hereinbefore defined, comprising mixing:
(i) a poly(meth)acrylate dispersion comprising poly(meth)acrylate polymer particles having an average diameter of 50-400 nm, as determined by ISO 22412:2017;
(ii) solid organic filler particles, wherein said solid organic filler particles comprise poly(meth)acrylate, polystyrene, polyacrylamide, polyurethane, polysiloxane, polyolefin, polyacrylonitrile, nylon, poly(vinyl ester), and mixtures thereof, are substantially spherical, and have an average diameter of 10 to 30 µm, as determined by ISO 13320:2009;
(iii) pigment;
(iv) water; and
(v) a biocide selected from the group consisting of: in can preservatives, dry film biocides, wood preservatives, or mixtures thereof.

Viewed from a further aspect, the present invention provides a container containing a composition as hereinbefore defined.

Viewed from a further aspect, the present invention provides a method of providing a coating on a surface, wherein said method comprises:
(i) applying a composition as hereinbefore defined; and
(ii) drying said composition to form a coating on the surface.

Viewed from a further aspect, the present invention provides a coating on a surface, wherein said coating is formed from a composition as hereinbefore defined.

Viewed from a further aspect, the present invention provides the use of a composition as hereinbefore defined to form a coating on at least one surface of an article.

It has been shown that solid organic filler particles can be used to improve the gloss and/or colour retention of a coating present on a surface, wherein said coating is formed from a composition as hereinbefore described.

### DEFINITIONS

As used herein the term "coating composition" refers to a composition that, when applied to a surface, forms a film or coating thereon.

As used herein the term "waterborne composition" refers to a dispersion wherein the continuous phase is aqueous.

As used herein the term "poly(meth)acrylate" refers to a polymer comprising repeat units derived from (meth)acrylate monomers. Generally, a poly(meth)acrylate will comprise at least 50 wt% repeat units derived from (meth)acrylate monomers, i.e. acrylate and/or methacrylate monomers.

As used herein the term "poly(meth)acrylate dispersion refers to a mixture of poly(meth)acrylate particles dispersed in a continuous liquid phase. Typically the continuous liquid phase is aqueous. The poly(meth)acrylate particles present in this dispersion are the film forming polymer present in the coating composition. Thus these particles coalesce after application and during drying. These poly(meth)acrylate particles are different particles to the solid organic filler particles also present in the composition and which are described below. Preferably the poly(meth)acrylate particles present in the dispersion have an average particle size of 50-400 nm.

As used herein the term "solid organic filler particles" refers to non-hollow, substantially spherical, particles comprising organic material. Preferably the solid organic filler particles have a larger average particle size to the poly(meth)acrylate particles present in the above-described dispersion.

As used herein the term "inorganic extender" refers to compounds which have a core that does not comprise carbon and which increase the volume or bulk of a coating composition. For example, the term includes uncoated particles consisting of silica or barium sulphate or any of the other inorganic materials listed above. The term also includes coated particles, wherein the core consists of an inorganic material and the coating (or shell) is either organic or inorganic.

As used herein the term "alkyd resin" refers to a polyester modified by the addition of at least one oil and/or fatty acid.

As used herein the term "alkyd emulsion" refers to a mixture of alkyd resin droplets dispersed in a continuous liquid phase. Typically the continuous liquid phase is aqueous.

As used herein the term "alkyl" refers to saturated, straight chained, branched or cyclic groups. Alkyl groups may be substituted or unsubstituted.

As used herein the term "cycloalkyl" refers to saturated or partially saturated mono- or bicyclic alkyl ring systems containing 3 to 10 carbon atoms. Cycloalkyl groups may be substituted or unsubstituted.

As used herein the term "weight % (wt%)", when used in relation to individual constituents of the composition, e.g. rheology modifier, biocide, drier etc., refers to the actual weight of constituent, i.e. without volatile components present, unless otherwise specified.

As used herein the term "weight % (wt%)", when used in relation to the coating compositions, refers to the weight relative to the total weight of the composition, i.e. including non-volatile and volatile components, unless otherwise specified.

As used herein the term "Tg" refers to "glass transition temperature" as determined by ASTM E 1356-08(2014).

As used herein the term "MFFT" refers to "minimal film formation temperature" as determined by ASTM D2354-10e1.

As used herein the term "molecular weight" refers to weight average molecular weight (Mw), unless otherwise specified.

As used herein the term "density" refers to density as determined by ISO 2811-1:2016 using a Metal pycnometer at 23°C.

As used herein the term "average diameter" refers to the Z-average diameter size as determined by ISO 22412:2017 using a Malvern Zetasizer Nano S instrument if the particle size is below 5 µm and ISO 13320:2009 using a Malvern Mastersizer 2000 if the particle size is above 5 µm.

### DETAILED DESCRIPTION OF THE INVENTION

The present invention relates to a coating composition comprising:
(i) a poly(meth)acrylate dispersion comprising poly(meth)acrylate polymer particles having an average diameter of 50-400 nm, as determined by ISO 22412:2017;
(ii) solid organic filler particles, wherein said solid organic filler particles comprise poly(meth)acrylate, polystyrene, polyacrylamide, polyurethane, polysiloxane, polyolefin, polyacrylonitrile, nylon, poly(vinyl ester), and mixtures thereof, are substantially spherical, and have an average diameter of 10 to 30 µm, as determined by ISO 13320:2009;
(iii) pigment;
(iv) water; and
(v) a biocide selected from the group consisting of: in can preservatives, dry film biocides, wood preservatives, or mixtures thereof,
wherein said composition comprises less than 8 wt% inorganic extender, based on the total weight of the composition.

The composition comprises less than 8 wt% inorganic extender, preferably less than 5 wt% inorganic extender, more preferably less than 3 wt% inorganic extender, yet more preferably less than 2 wt% inorganic extender and still more preferably less than 1 wt% inorganic extender, based on the total weight of the composition. Particularly preferably the composition comprises substantially no, i.e. 0 wt%, inorganic extender. Preferred coating compositions of the invention comprise 0-8 wt% inorganic extender, preferably 0-5 wt% inorganic extender, more preferably 0-3 wt% inorganic extender and yet more preferably 0-2 wt% inorganic extender. Representative examples of inorganic extenders include silica, barium sulphate, calcium carbonate, nepheline syenite, dolomite, feldspar, mica, wollastonite, talc, leukophyllite, aluminium oxide, aluminium trihydroxide and diatomaceous earth. Such inorganic extenders typically are supplied in a range of different shapes, e.g. nodules, irregular, cubic/blocky, tabular, platy, elongated (needle/fiber) and spherical.

Particularly preferred coating compositions of the invention comprise less than 8 wt% of feldspar, talc, nepheline syenite, calcium carbonate, dolomite, leukophyllite and mixtures thereof, and still more preferably less than 5 wt% of feldspar, talc, nepheline syenite, calcium carbonate, dolomite, leukophyllite and mixtures thereof.

Preferably the coating composition further comprises: (vi) rheology modifier; (vii) alkyd resin; (viii) solvent and/or (ix) additives.

Advantageously the coating composition of the present invention produces coatings with a low gloss level, i.e. a gloss level of less than 60 at an angle of 60° as determined by NS EN ISO 2813:2014, good gloss retention, good colour retention and low dirt pick up. This means that coatings, even exterior coatings, produced with compositions of the invention are durable, i.e. have a long lifetime before the coating needs to be renewed, even when exposed to UV/VIS radiation and water. This means that the coatings consistently look "new" or fresh. A further benefit of coatings produced by compositions of the present invention is that the gloss level is consistent, regardless of the viewing angle.

### Poly(meth)acrylate dispersion

The coating composition of the present invention comprises a poly(meth)acrylate dispersion comprising poly(meth)acrylate polymer particles having an average diameter of 50-400 nm, as determined by ISO 22412:2017. As is well known to the person skilled in the art, a poly(meth)acrylate dispersion is a composition comprising polymer particles dispersed in a solvent. The dispersed poly(meth)acrylate may be any (meth)acrylate polymer suitable for use as a film-forming polymer in coating compositions. Such poly(meth)acrylates are well known in the art. The liquid phase, i.e. solvent of the dispersion, is preferably aqueous. More preferably the liquid phase consists of water.

Preferably the poly(meth)acrylate dispersion comprises a poly(meth)acrylate polymer comprising at least 50 wt%, more preferably at least 60 wt%, still more preferably at least 75 wt% and yet more preferably at least 90 wt%, (meth)acrylate monomers, based on the dry weight of the polymer. Preferred poly(meth)acrylate polymer present in the poly(meth)acrylate dispersion in the coatings of the present invention comprise 50-100 wt%, more preferably 60-100 wt%, still more preferably 75-100 wt% and yet more preferably 90-100 wt% (meth)acrylate monomers, based on the dry weight of the polymer. Examples of poly(meth)acrylate polymers comprising non-acrylate monomers are poly(meth)acrylate-polyurethanes, poly(meth)acrylate-polyesters and poly(meth)acrylate-silicones/siloxanes. Such polymers typically comprise a poly(meth)acrylate backbone and side chains of polyurethane, polyester or silicone/siloxane. The side chains are typically grafted onto the poly(meth)acrylate backbone. Poly(meth)acrylate-polyurethanes and poly(meth)acrylate-silicones/siloxanes are preferred.

When the poly(meth)acrylate present in the poly(meth)acrylate dispersion comprises non-(meth)acrylate monomers, the other monomers are preferably selected from acrylamide, vinyl and/or styrenic monomers such as styrene, α-methyl styrene, vinyl toluene, vinyl esters of versatic acids and mixtures thereof. Particularly preferably, however, poly(meth)acrylate polymers present in the poly(meth)acrylate dispersion comprise 100 wt% (meth)acrylate monomers, i.e. they do not comprise any monomers of another type, based on the dry weight of the polymer.

The poly(meth)acrylate present in the poly(meth)acrylate dispersion present in the coating compositions of the present invention may be a homopolymer or a copolymer. Preferably the poly(meth)acrylate is a copolymer. Particularly preferably the poly(meth)acrylate comprises at least two (e.g. 2, 3, 4 or more) different (meth)acrylate monomers.

Preferably the poly(meth)acrylate dispersion comprises a poly(meth)acrylate polymer comprising a residue of at least one, and preferably at least two, monomers of formula (I): 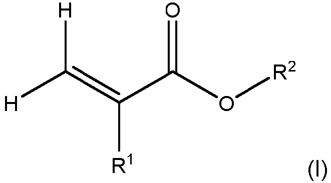
R¹ is H or CH₃;
R² is H or optionally substituted C₁₋₁₈ alkyl, wherein said substituents are selected from OH and OR³; and
R³ is selected from C₁₋₈ alkyl and C₃₋₈ cycloalkyl.

In preferred monomers of formula (I), R² is H or optionally substituted C₁₋₁₂ alkyl, more preferably H or optionally substituted C₁₋₁₀ alkyl and still more preferably H or optionally substituted C₁₋₁₀ alkyl.

In some preferred monomers of formula (I), R² is H or unsubstituted C₁₋₁₂ alkyl, more preferably H or unsubstituted C₁₋₁₀ alkyl and still more preferably H or unsubstituted C₁₋₁₀ alkyl.

In other preferred monomers of formula (I), R² is H or substituted C₁₋₁₂ alkyl, more preferably H or substituted C₁₋₁₀ alkyl and still more preferably H or substituted C₁₋₁₀ alkyl, wherein the substituents are selected from OH and OR³, and R³ is selected from C₁₋₈ alkyl and C₃₋₈ cycloalkyl. More preferred substituents are selected from OH and OR³, wherein R³ is C₁₋₈ alkyl.

Preferably the poly(meth)acrylate dispersion comprises a (meth)acrylate polymer comprising a residue of at least one monomer selected from methyl (meth)acrylate, ethyl (meth)acrylate, propyl (meth)acrylate, butyl (meth)acrylate, hexyl (meth)acrylate, 2-ethylhexyl (meth)acrylate, octyl (meth)acrylate, isooctyl (meth)acrylate, n-decyl (meth)acrylate, isodecyl (meth)acrylate, tert-butyl (meth)acrylate and 2-hydroxyethyl (meth)acrylate. Particularly preferably the poly(meth)acrylate dispersion comprises a (meth)acrylate polymer comprising a residue of at least one, and preferably at least two, monomers selected from methyl methacrylate, butyl methacrylate, butyl acrylate and 2-ethylhexyl acrylate.

In preferred poly(meth)acrylate dispersions present in the coating compositions of the present invention, the poly(meth)acrylate comprises at least two (e.g. 2, 3 or 4) different (meth)acrylate monomers of formula (I). In preferred coating compositions, the poly(meth)acrylate comprises at least one monomer of formula (I) wherein R¹ is H and at least one monomer of formula (I) wherein R¹ is CH₃.

The poly(meth)acrylate dispersion may comprise chemical groups which enable self-crosslinking during drying as for example described in Journal of Coatings Technology and Research, September 2008, Volume 5, Issue 3, pp 285-297.

Preferred poly(meth)acrylate dispersions present in the coating compositions of the present invention comprise a poly(meth)acrylate having a weight average molecular weight of 100,000 to 3,000,000, more preferably 150,000 to 2,500,000 and still more preferably 200,000 to 2,000,000.

Preferred poly(meth)acrylate dispersions present in the coating compositions of the present invention comprise a poly(meth)acrylate having a Tg of -5 to 40 °C, more preferably -3 to 30 °C and still more preferably 0 to 20 °C, as determined by ASTM E1356-08(2014).

Preferred poly(meth)acrylate dispersions present in the coating compositions of the present invention comprise a poly(meth)acrylate having a minimal film formation temperature (MFFT) of less than 40 °C, more preferably less than 30 °C and still more preferably less than 20 °C. The minimum MFFT may be, for instance, 5 °C. MFFT is determined by ASTMD2354-10e1. This is advantageous as a low MFFT makes it possible to reduce the amount of cosolvent needed and thereby reduce the VOC of the coating composition.

The poly(meth)acrylate dispersion present in the coating composition of the present invention may comprise one or more (e.g. 1, 2, 3, 4 or 5) (meth)acrylate polymers as hereinbefore described. Preferred coating compositions of the present invention comprise 1, 2, 3 or 4 (meth)acrylate polymers and still more preferably 1 or 2 (meth)acrylate polymers.

The poly(meth)acrylate dispersion present in the coating composition of the present invention comprises poly(meth)acrylate particles having an average diameter of 50-400 nm, preferably 50-300 nm and more preferably 80-200 nm, as determined by ISO 22412:2017. The poly(meth)acrylate particles are preferably smaller than the solid organic filler particles present in the coating composition. The poly(meth)acrylate particles constitute the film forming polymer present in the composition and coalesce after application and during drying.

The poly(meth)acrylate dispersion present in the coating composition of the invention preferably comprises 30-70 wt% poly(meth)acrylate particles and more preferably 40-60 wt%, based on weight of the dispersion. The dispersion may optionally comprise other conventional additives such as dispersing agents, preservatives and defoamers.

Poly(meth)acrylate dispersions suitable for use in the coating composition of the present invention may be purchased commercially. Representative examples of suitable poly(meth)acrylate dispersions include CHP 550, CHP 559 from CH polymers, Primal AC 337 ER, Primal AC 260, Primal AC 507M2 from Dow Coatings Material, Neocryl XK 231, Neocryl XK 170, Neocryl XK 190, Neocryl XK 188 from DSM Coating Resins, Encor 2121, Encor 2741, SNAP 720, SNAP 2785, SNAP 2142 from Arkema, Acronal LR9014, Acronal LR 8960, Acronal A508, Acronal A754, Acronal Edge 6283, Acronal DS 6277 from BASF, Liocryl DRR 2459,Liocryl DRR 2489 from Synthopol and Orgal P838 from Organik Kimya. Alternatively, poly(meth)acrylate dispersions may be prepared by conventional polymerisation techniques known in the art.

The amount of the poly(meth)acrylate dispersion present in the coating composition of the invention is 5-60 wt%, more preferably 10-55 wt% and still more preferably 15-40 wt%, based on the total weight of dry polymer present in the composition.

### Solid organic filler particles

The coating compositions of the present invention also comprise solid organic filler particles. The solid organic filler particles are different to the poly(meth)acrylate particles present in the dispersion used in the composition. Thus the solid organic filler particles are added separately to the poly(meth)acrylate dispersion during preparation of the coating compositions of the invention.

The solid organic filler particles are preferably non-hollow. Thus the particles have a substantially homogeneous composition throughout their structure. Advantageously this means that the particles do not scatter light. This is particularly beneficial when the composition comprises non-white coloured pigments and the resulting coatings are non-white coloured. Preferably the solid organic filler particles have a density of 0.9-1.3 gcm⁻³, more preferably 0.95-1.25 gcm⁻³, and still more preferably 1.0-1.2 gcm⁻³, as determined by ISO 2811-1:2016 using a Metal pycnometer at 23°C. This reflects the fact that the filler particles are solid rather than hollow.

Preferably the solid organic filler particles present in the coating compositions of the invention are non-expandable and/or non-compressible at atmospheric conditions, i.e. 20 °C and 1 atmosphere. This is beneficial as it means that the filler particles do not change shape and/or size during processing. Thus the uniformity of particle size, as discussed further below, is maintained during preparation of the coating compositions of the invention and its ultimate application to substrates.

The solid organic filler particles present in the coating compositions of the present invention comprise and more preferably consist of poly(meth)acrylate, polystyrene, polyacrylamide, polyurethane, polysiloxane, polyolefin (e.g. polyethylene, polypropylene, polytetrafluoroethylene), polyacrylonitrile, nylon, poly(vinyl ester), and copolymers thereof. Solid organic filler particles comprising these polymers have been found to yield coatings with good gloss retention and good colour retention, thereby increasing the overall lifetime of coatings. In contrast coating compositions comprising solid organic filler particles comprising poly(vinyl halide) have much poorer performance properties. This is because poly(vinyl halide) is prone to UV/VIS degradation.

Preferred solid organic filler particles present in the coating compositions of the present invention comprise (and more preferably consist of) poly alkyl (meth)acrylate, polystyrene, polyethylene, polypropylene, polytetrafluoroethylene and copolymers thereof. Yet further preferred solid organic filler particles present in the coating compositions of the present invention comprise (and more preferably consist of) poly alkyl (meth)acrylate and copolymers thereof, e.g. polymethyl methacrylate (PMMA). The organic nature of the filler particles present in the coating compositions of the present invention improves their compatibility with the poly(meth)acrylate dispersion.

The solid organic filler particles present in the coating compositions of the present invention preferably comprise a polymer comprising a residue of at least one monomer selected from (meth)acrylic acid, C₁₋₈ alkyl (meth)acrylate, styrene, α-methyl styrene, ethylene, propylene, tetrafluoroethylene, and mixtures thereof. Still more preferably the solid organic filler particles present in the coating compositions of the present invention comprise a polymer comprising a residue of C₁₋₈ alkyl (meth)acrylate e.g. methyl methacrylate.

Preferred solid organic filler particles present in the coating compositions of the present invention are cross-linked. The skilled person in the art is able to identify suitable cross-linking agents depending on the types of monomers forming the particles. Particles comprising poly(meth)acrylate, for instance, may be cross linked with a group such as allyl methacrylate and particles comprising polystyrene may be cross linked with divinyl benzene.

The solid organic filler particles present in the coating compositions of the invention preferably have a Tg of 20-130 °C, more preferably 30 to 120 °C and still more preferably 50 to 120 °C as determined by ASTM E1356-08(2014).

The solid organic filler particles present in the coating compositions of the invention are substantially spherical and more preferably spherical. This is advantageous as it allows the filler particles to pack more closely together in the coating compositions of the invention compared to, for instance, inorganic extenders which conventionally have a wide range of different shapes and sizes including nodules, plates and needles as well as spheres.

Preferably the solid organic filler particles have a Z-average diameter of 10-30 µm, as determined by ISO 22412:2017 using a Malvern Zetasizer Nano S instrument if the particle size is below 5 µm and ISO 13320:2009 using a Malvern Mastersizer 2000 if the particle size is above 5 µm. These particle sizes are preferred to ensure a desirable gloss level is achieved, without unduly increasing the amount of solid organic filler particles present, and to ensure the final coating is visually appealing, e.g. to ensure filler particles do not protrude out of the final coating.

The solid organic filler particles present in the coating composition of the present invention are preferably monodisperse. Thus, preferably the solid organic filler particles have an average diameter of 10-30 µm, with a polydispersity of less than 5%. It has been found that the use of monodisperse particles advantageously improves the consistency of the gloss level, when viewed from different angles.

The solid organic filler particles present in the coating compositions of the present invention may be prepared by conventional polymerisation processes, such as emulsion polymerisation, seeded growth polymerisation and suspension polymerisation. The polymerisation may be a single stage process or a multi-step process. Alternatively, suitable solid organic filler particles are commercially available.

The amount of the solid organic filler particles present in the coating compositions of the invention is preferably 0.1-30 wt%, more preferably 0.5-25 wt% and still more preferably 1-20 wt%, based on the total weight of the composition. The amount of solid organic filler particles present depends on the gloss level desired. When a gloss level of less than 60 at 60° is desired, the amount of solid organic filler particles is preferably 0.1-30 wt% and more preferably 0.1-20 wt%. When a gloss level of less than 40 at 60° is desired, the amount of solid organic filler particles is preferably 0.1-30 wt% and more preferably 0.5-20 wt%. When a gloss level of less than 20 at 60° is desired, the amount of solid organic filler particles is preferably 0.1-30 wt% and more preferably 1-20 wt%. It should be understood that the optimal amount of solid organic filler particles required to obtain a desired gloss level depends on the particle size of the solid organic filler particles as well as the other ingredients present in the coating composition.

### Pigments

The coating composition of the present invention comprises pigment.

The coating composition of the present invention preferably comprises one or more pigments to give colour and opacity. The pigments may be white pigments or non-white coloured pigments. In coating compositions comprising non-white coloured pigments the presence of the solid organic filler particles are particularly beneficial as they improve gloss and colour retention and also do not cause light scattering. This improves the consistency of the gloss appearance when it is viewed from different angles. In coating compositions comprising white pigments the presence of the solid organic filler particles are advantageous as they reduce dirt pick and improve gloss retention, meaning the overall appearance of the coatings remain new or fresh looking for a prolonged period of time.

The pigments may be inorganic pigments, organic pigments or a mixture thereof.

Representative examples of suitable inorganic pigments include metal oxides (e.g. iron oxides, chrome oxides etc.), Complex Inorganic Colour Pigments (CICPs) (e.g. chromium and nickel titanate, cobalt blue and green aso), cadmium pigments, lead chromates, bismuth vanadate pigments, zinc sulfide, zinc oxide, titanium dioxide and carbon black.

Representative examples of classes of suitable organic pigments include azo pigments and polycyclic pigments. Azo pigments include monoazo yellow and orange pigments, disazo pigments, beta-naphthol pigments, naphthol AS pigments, azo pigment lakes, benzimidazolone pigments, disazo condensation pigments, metal complex pigments and isoindolinone and isoindoline pigments. Polycyclic pigments include phtalocyanine pigments (blue & green), quinacridone pigments, perylene and perinone pigments, thioindigo pigments, anthtaquinone pigments, dooxazine pigments, triarylcarbonium pigments, quinopthalone pigments and diketo-pyrrolo-pyrrol pigments.

Specific examples of non-white coloured pigments include iron oxides, zinc sulfide, chromium oxide green, cadmium pigments, naphthol red, phthalocyanine compounds (e.g. phthalocyanine green, phthalonitrile blue), ultramarine blue azo pigments and carbon black. An example of a white pigment is titanium oxide. A huge range of suitable pigments are commercially available.

During preparation of the coating composition of the present invention the pigment may be ground and mixed with the other components present therein. This method provides coating compositions having a ready-made colour. Alternatively, the pigment may be added to the coating composition after all of the other components of the composition have been mixed together in a post-addition step. This process is often referred to as tinting.

Preferably the total amount of pigment present in the compositions of the invention is 0.5-40 wt%, more preferably 1-35 wt% and still more preferably 2-30 wt%, based on the total weight of the composition. The skilled man will appreciate that the pigment content will vary depending on the other components present and the end use of the coating composition.

### Water

The coating compositions of the present invention are waterborne. The water present in the coating composition derives from the poly(meth)acrylate dispersion, which has an aqueous continuous phase, other components present in the composition which are supplied in water and water which is added to the overall mixture. The water added to the overall mixture forming the composition is preferably deionised water, or soft or pure tap water. Preferably the water has a hardness of less than 5 dH°.

Preferred compositions of the invention comprise at least 50 wt% water, based on the total weight of the solvent present in the coating composition. More preferred compositions comprise 60 to 100 wt% water, still more preferably 70-100 wt% water and yet more preferably 85 to 100 wt% water, based on the total weight of solvent present in the coating composition.

Preferred compositions of the invention comprise at least 20 wt% water, based on the total weight of the coating composition. More preferred compositions comprise 30 to 90 wt% water, still more preferably 35-70 wt% water and yet more preferably 40 to 65 wt% water, based on the total weight of the coating composition.

Optionally surfactants may be utilised to assist in the dispersion of the poly(meth)acrylate resin in the water. Suitable surfactants include conventional anionic, cationic and ionic surfactants and mixtures thereof.

### Rheology Modifiers

The composition of the invention preferably comprises a rheology modifier. Still more preferably the composition of the invention further comprises a mixture of at least 2 and more preferably at least 3 rheology modifiers. The presence of rheology modifier in the compositions of the invention advantageously improves the storage stability, the body of the coating composition and the application properties of the coating.

The rheology modifier present in the coating compositions of the invention is preferably a polysaccharide rheology modifier, an associative rheology modifier, a clay or a mixture thereof. Cellulosic rheology modifiers (e.g. hydroxyethyl cellulose) may also be used. Particularly preferred compositions of the invention comprise a mixture of associative rheology modifiers.

Exemplary polysaccharide rheology modifiers for use in the coating compositions include alginin, guar gum, locust bean gum and xanthan gum.

Exemplary clay rheology modifiers for use in the coating compositions of the invention include kaolin clay, smectite clay, illite clay, chlorite clay, synthetic clay or organically modified clay.

Exemplary associative rheology modifiers for use in the coating compositions include non-ionic synthetic associative rheology modifier (niSAT), hydrophobically modified ethoxylated urethanes (HEUR), hydrophobically modified alkali-swellable emulsions (HASE), and styrene-maleic anhydride terpolymers (SMAT). Acidic acrylate copolymers (cross-linked) of ethyl acrylate and methacrylic acid, and acrylic terpolymers (cross-linked) of ethyl acrylate, methacrylic acid, and nonionic urethane surfactant monomer may also be used as associative rheology modifiers. Particularly preferred associative rheology modifiers present in the coating compositions of the invention are hydrophobically modified ethoxylated urethanes (HEUR) and hydrophobically modified alkali-swellable emulsions (HASE). Particularly preferred compositions of the invention comprise a mixture of hydrophobically modified ethoxylated urethanes (HEUR) and hydrophobically modified alkali-swellable emulsions (HASE). When one or more suitable associative rheology modifiers are used, the thickening reaction is caused in part by either association between the associative rheology modifier and at least one other particle of the coating composition (e.g., a pigment particle or polymer particle) or another associative rheology modifier molecule.

Preferred compositions of the invention comprise 0.05 to 5.0 wt% rheology modifier and still more preferably 0.1-3.0 wt% rheology modifier, based on the total weight of the composition.

### Alkyd resin

The coating compositions of the present invention optionally comprise an alkyd resin.

When present in the coating compositions of the present invention, the alkyd resin is preferably derived from at least a polycarboxylic acid and/or anhydride, a polyol and an unsaturated fatty acid or oil. Preferably the unsaturated fatty acid or oil is a vegetable oil and/or fatty acids present in vegetable oil. Optionally the alkyd resin further comprises one or more monoacids.

The polycarboxylic acid is preferably a triacid or a diacid and more preferably a diacid. The polycarboxylic acid is preferably an alkyl polycarboxylic acid or an aromatic polycarboxylic acid. Alkyl polycarboxylic acids include acyclic and cyclic polycarboxylic acids. Preferred polycarboxylic acids are C₃₋₁₂ polycarboxylic acids and more preferably C₄₋₁₀ polycarboxylic acids. The anhydride is preferably a C₄₋₁₀ cyclic anhydride.

Representative examples of suitable polycarboxylic acids include o-phthalic acid, isophthalic acid, adipic acid, succinic acid, terephthalic acid, 1,4-cyclohexanedicarboxylic acid, hexahydrophthalic acid, citric acid, fumaric acid, mesaconic acid, maleic acid, citraconic acid, 5-tert-butyl isophthalic acid, trimellitic acid, pyromellitic acid, 2,2,4-trimethyl adipic acid, azelaic acid, sebacic acid, dimerized fatty acids, cyclopentane-1,2-dicarboxylic acid, cyclohexane-1,2-dicarboxylic acid, 4-methylcyclohexane-1,2- dicarboxylic acid, tetrahydrophthalic acid, endomethylene-cyclohexane-1,2-dicarboxylic acid, butane-1,2,3,4-tetra-carboxylic acid, endoisopropylidene-cyclohexane-1,2-dicarboxylic acid, cyclo-hexane-1,2,4,5-tetracarboxylic acid, butane-1,2,3,4-tetracarboxylic acid, 1,2-cyclohexanedicarboxylic acid, 1,3-cyclohexanedicarboxylic acid, furandicarboxylic acids, tetrahydrofurandicarboxylic acids, itaconic acid, citraconic acid and dimer fatty acid.

Representative examples of suitable anhydrides include o-phthalic anhydride, succinic anhydride, hexahydrophthalic anhydride, maleic anhydride, trimellitic anhydride, pyromellitic anhydride, cyclopentane-1,2-dicarboxylic anhydride, cyclohexane-1,2-dicarboxylic anhydride, 4-methylcyclohexane-1,2-dicarboxylic anhydride, tetrahydrophthalic anhydride, endomethylene-cyclohexane-1,2-dicarboxylic anhydride, endoisopropylidene-cyclohexane-1,2-dicarboxylic anhydride, 1,2-cyclohexanedicarboxylic anhydride, itaconic anhydride and lactide.

The polyol present in the alkyd resin preferably comprises 2-6 hydroxyl groups. More preferably the polyol is a diol, triol or tetrol. The polyol is preferably an aromatic polyol, an alkyl polyol or a cycloalkyl polyol. Preferred polyols are alkyl polyols and cycloalkyl polyols. Preferred alkyl polyols are C₂₋₁₂ polyols and more preferably C₃₋₁₀ polyols. Preferred cycloalkyl polyols are C₅₋₁₂ polyols and more preferably C₆₋₁₀ polyols.

Representative examples of suitable polyols include alkylene glycols, poly(alkylene) glycols, polycarbonate polyols, dihydroxyalkyl-1,3-dioxanes, di(hydroxyalkyl)furans, di(hydroxyalkyl)tetrahydrofurans, 2-alkyl-1,3-propanediols, 2,2-dialkyl-1,3-propanediols, 2-hydroxyalkyl-1,3-propanediols, 2,2-dihydroxyalkyl-1,3-propanediols, 2-alkyl-2-hydroxyalkyl-1,3-propanediols, ethylene glycol, propylene glycol, 1,3-propanediol, 1,4-butylene glycol, 1,3-butylene glycol, neopentyl glycol, 2-butyl-2-ethyl-1,3-propanediol, 1,6-hexane diol, 1,12-dodecane diol, 3-methyl-1,5-pentane diol, 2,2,4-trimethyl-1,6-hexane diol, 2,2-dimethyl-1,3-propane diol, 2-methyl-2-cyclohexyl-1,3-propane diol, 1,4-cyclohexane dimethanol, glycerol, trimethylol ethane, trimethylol propane, pentaerythritol, sorbitol 5,5-dihydroxymethyl-1,3-dioxane, di(hydroxymethyl)furan, di(hydroxymethyl) tetrahydrofuran, spiroglycol (2,4,8,10-tetraoxaspiro[5.5]undecane-3,9-diethanol), isosorbide, isomannide, isoidide, di-glycerol, trimethylolbutane, di-trimethylolethane, di-trimethylolpropane, di-trimethylolbutane, di-pentaerythritol, tri-pentaerythritol, anhydroennea-heptitol, mannitol, glycerol mono(meth)allyl ether, di-glycerol di(meth)allyl ether, trimethylolethane mono(meth)allyl ether, trimethylolpropane mono(meth)allyl ether, trimethylolbutane mono(meth)allyl ether, pentaerythritol mono(meth)allyl ether, pentaerythritol di(meth)allyl ether, di-trimethylolethane mono(meth)allyl ether, di-trimethylolethane di(meth)allyl ether, di-trimethylolpropane mono(meth)allyl ether, di-trimethylolpropane di(meth)allyl ether, di-trimethylolbutane mono(meth)allyl ether, and/or di-trimethylolbutane di(meth)allyl ether.

The unsaturated fatty acid or oil (unsaturated triglyceride) present in the alkyd resin is preferably a C₈₋₂₄, more preferably a C₁₂₋₂₄ and still more preferably a C₁₄₋₂₄ unsaturated fatty acid. The unsaturated fatty acid preferably comprises 1, 2 or 3 double bonds. When multiple double bonds are present, they may be conjugated or non-conjugated. The double bonds may have cis or trans geometry.

Representative examples of suitable unsaturated fatty acids include linolenic, linoleic, oleic, myristoleic, palmitoleic, arachidonic, erucic, gadoleic, clupanadonic, ricinoleic, licanic, nisinic, eleostearic, stearidonic, eicosapentaenoic, docosahexaenoic, docosatetraenoic, vaccenic, paullinic, elaidic, gondoic, nervonic and mead acids, soy bean fatty acid, tall oil fatty acid, or mixtures thereof. Preferably the unsaturated fatty acid is selected from linolenic, linoleic and oleic acids, soy bean fatty acid, tall oil fatty acid, and mixtures thereof.

Preferably a mixture of fatty acids will be present in the alkyd resin. Typically the fatty acid is derived from natural or synthetic oils and thus the mixture of fatty acids present in the alkyd resin reflects the mixture present in the oil. Saturated fatty acids and oils may optionally be present. Examples of suitable oils for providing fatty acid groups in alkyd resin include linseed oil, soybean oil, rapeseed oil, sun flower oil, palm oil, tung oil, calendula oil, wood oil (e.g. pine oil), safflower oil, tuna fish oil, and combinations thereof. Preferably the oil is selected from rapeseed oil, linseed oil, sunflower oil and soybean oil.

The alkyd resins present in the compositions of the invention are prepared by polymerisation. The polymerisation is preferably random. This is because: (i) at least some of the monomers from which the alkyd resin is derived contain more than 2 reactive groups; (ii) at least some of the compounds from which the alkyd resin is derived contain only 1 reactive group and (iii) optionally other units are incorporated into the structure (see below). The monomers containing more than 2 reactive groups generate branches in the alkyd resin and the compounds with a single reactive group stop chain growth. The net effect is that the chains present within the alkyd resin structure are varied, e.g. in terms of units present and in length. Cross links may also form. For this reason, it is most appropriate to describe the alkyd resins in terms of the monomers from which they are preferably derived.

In preferred compositions of the present invention the alkyd resin is derived from at least one monomer of formula (II): 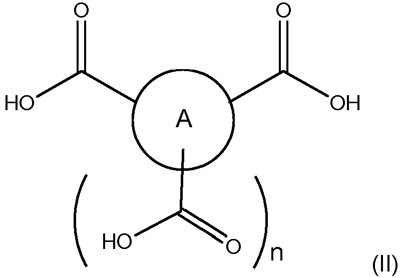 wherein
A is an organic group; and
n is 0, 1 or 2.

In preferred compositions of the invention, A is an organic group selected from C₅₋₁₀ aryl, C₅₋₁₀ cycloalkyl and C₁₋₂₀ alkyl. More preferably A is an organic group selected from C₆ aryl, C₆ cycloalkyl and C₂₋₁₀ alkyl.

In further preferred compositions of the invention, n is 0 or 1. When n is 1 or more, the alkyd resin is branched.

In particularly preferred compositions of the invention, the alkyd resin is derived from at least two different monomers of formula (II). For example, the alkyd resin may derive from 2, 3 or 4 different monomers of formula (II).

In further preferred compositions of the present invention the alkyd resin is derived from at least one monomer of formula (III): 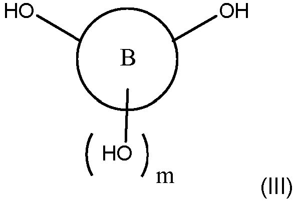 wherein
B is an organic group; and
m is 0, 1, 2, 3 or 4.

In preferred compositions of the invention, B is an organic group selected from C₅₋₁₀ cycloalkyl and C₁₋₁₈ alkyl. More preferably B is an organic group selected from C₆ cycloalkyl and C₂₋₁₀ alkyl.

In further preferred compositions of the invention, m is 1, 2, 3 or 4. When m is 1, 2, 3 or 4, the alkyd resin is branched.

In particularly preferred compositions of the invention, the alkyd resin derives from at least two different monomers of formula (III). For example, the alkyd resin may derive from 2, 3 or 4 different monomers of formula (III).

In particularly preferred compositions of the invention, the alkyd resin derives from at least two different monomers of formula (II) and at least two different monomers of formula (III). For example, the alkyd resin may derive from 2, 3 or 4 different monomers of formula (II) and 2, 3, or 4 different monomers of formula (III).

Preferably the alkyd resin is a random, branched copolymer.

In further preferred compositions of the present invention the alkyd resin further derives from C₈₋₂₄, more preferably a C₁₂₋₂₄ and still more preferably a C₁₄₋₂₄ unsaturated fatty acid. The unsaturated fatty acid preferably comprises 1, 2 or 3 double bonds. When multiple double bonds are present, they may be conjugated or non-conjugated. The double bonds may have cis or trans geometry.

Representative examples of suitable unsaturated fatty acids include linolenic, linoleic, oleic, myristoleic, palmitoleic, arachidonic, erucic, gadoleic, clupanadonic, ricinoleic, licanic, nisinic, eleostearic, stearidonic, eicosapentaenoic, docosahexaenoic, docosatetraenoic, vaccenic, paullinic, elaidic, gondoic, nervonic and mead acids, soy bean fatty acid, tall oil fatty acid, or mixtures thereof. Preferably the unsaturated fatty acid is selected from linolenic, linoleic and oleic acids, soy bean fatty acid, tall oil fatty acid and mixtures thereof.

Preferably a mixture of fatty acids will be present in the alkyd resin. Typically, the fatty acid is derived from natural or synthetic oils and thus the mixture of fatty acids present in the alkyd resin reflects the mixture present in the oil. Saturated fatty acids and oils may optionally be present. Examples of suitable oils for providing fatty acid groups in alkyd resin include linseed oil, soybean oil, rapeseed oil, sun flower oil, palm oil, tung oil, calendula oil, wood oil (e.g. pine oil), safflower oil, tuna fish oil, and combinations thereof. Preferably the oil is selected from rapeseed oil, linseed oil, sunflower oil and soybean oil.

Alkyd resins are often characterised by their oil length. The alkyd resin present in the compositions of the present invention preferably has an oil length of 30-85 wt%, more preferably 40 to 85 wt% and still more preferably 55-85 wt%. Alkyds comprising at least 55 wt% fatty acids are generally referred to as long oil alkyds whilst alkyds comprising less than 40 wt% fatty acids are generally referred to as short oil alkyds. Alkyds with 40-55 wt% fatty acids are generally referred to as medium oil alkyds.

The degree of modification by fatty acids plays an important role in determining the properties of the alkyd resin. By modifying the alkyd resin with unsaturated fatty acids, the resin becomes auto-oxidative curing.

Alkyd resins that are suitable for incorporation into the compositions of the present invention are commercially available. Alternatively, the alkyd resin may be obtained using conventional synthesis techniques that are well known in the art. General processes for the preparation of alkyd polyesters are described in "Alkyd Resin Technology" by T. C. Patton, Publisher John Wiley & Sons Inc. (1962).

The alkyd resin preferably has a Mn of 1,000-6,000, more preferably 1,200-5,000 and still more preferably 1,500-3,500. The alkyd resin preferably has a Mw of 3,000-300,000, more preferably 4,000-70,000 and still more preferably 4,000-25,000. The polydispersity index (PDI) of the alkyd resin is preferably 1.0-15.0, more preferably 1.5-10.0 and still more preferably 2.0-8.0.

The alkyd resin preferably has a final polymer acid value of 1 to 40 mg KOH/g, more preferably 1 to 20 mg KOH/g and still more preferably 3 to 16 mg KOH/g. Acid value is determined in accordance with ISO 2114.

The alkyd resin is preferably present in the compositions of the present invention as an alkyd emulsion. The alkyd emulsion present in the coating composition of the present invention preferably comprises alkyd resin droplets having an average diameter of 100-1000 nm, more preferably 150-800 nm and still more preferably 200-600 nm, as determined by ISO 22412:2017.

The alkyd emulsion preferably present in the coating composition of the present invention preferably comprises 30-70 wt% alkyd droplets and more preferably 40-60 wt% alkyd droplets, based on the weight of the emulsion. The emulsion may optionally comprise other conventional additives such as surfactants, preservatives, neutralizing agents and defoamers
In preferred compositions of the present invention, the weight ratio of poly(meth)acrylate to alkyd resin is 50:50 to 100:0, more preferably 70:30 to 98:2 and still more preferably 80:20 to 95:5, based on the dry weight of the polymers.

Preferred compositions of the present invention comprise 0-20 wt%, more preferably 0.5-15 wt% and still more preferably 1-10 wt% of alkyd resin, based on the total weight of the composition.

### Drier

When the compositon of the present invention comprises alkyd resin, the time for the composition to dry depends on the concentration and types of unsaturated fatty acids present therein. Preferably the auto-oxidation and crosslinking reactions involved in drying are accelerated by the presence of a metal-based drying catalyst, commonly referred to as a "drier". The metal within the drying catalyst catalyzes autoxidation by forming a complex with both atmospheric oxygen and the double bonds of the unsaturated fatty acid groups within the composition.

Examples of known driers include compounds, polymers and polyvalent salts containing cobalt, calcium, vanadium, copper, zinc, iron, zirconium, manganese, barium, zinc and strontium. When the drier is in salt form, the afore-mentioned metals preferably form the cation and halides, nitrates, sulphates, carboxylates, such as acetates, ethylhexanoates, octanoates and naphthenates, or acetoacetonates form the anion. Other known driers include ethylhexanoate and neodecanoate. Any conventional drier may be present in the compositions of the invention.

Preferred compositions of the present invention, and in particular those comprising alkyd resin, comprise 0.05-0.5 wt%, more preferably 0.1-0.4 wt% and still more preferably 0.1-0.3 wt% of drier, based on the solid content of drier present in the total weight of the composition.

### Biocides

The terms biocide, antimicrobial agent, biologically active compounds, film preservative, in can preservative and toxicant is used in the industry to describe known compounds that act to prevent biological growth, e.g. growth of mould, algae and the like. The biocide may be inorganic, organometallic or organic. Preferred biocides present in the compositions of the invention are organic agents. Suitable biocides are commercially available.

The coating compositions of the present invention comprise in can preservative (PT 6), dry film biocide (PT 7) and/or wood preservatives (PT 8). Mixtures of different biocides may also be employed. Preferred compositions of the present invention comprise at least one in can preservative. Further preferred compositions of the present invention comprise at least one dry film biocide. Particularly preferred compositions of the present invention comprise at least one in can preservative, at least one dry film biocide and optionally a wood preservative. It should be noted here that some compounds perform more than one of these functions.

Representative examples of suitable in can preservatives that may be present in the coating compositions of the present invention include:
Isothiazolines: Reaction mass of 5-chloro-2-methyl-4-isothiazolin-3-one and 2-methyl-2H-isothiazol-3-one (3:1) (CIT/MIT) (PT6, 0.0001-0.01% (1-100 ppm)); 5-chloro-2-methyl-4-isothiazolin-3-one (CIT) (PT6, 0.0001-0.01% (1-100 ppm)); 2-Methyl-4-isotiazolin-3-one (MIT)(PT6, 0.0001-0.05 (1-500 ppm)); 2-Methyl-1,2-Benzisothiazol-3(2H)-one (MBIT)(PT6, 0.0001-0.05 (1-500 ppm)); 1,2-Benzisothiazolin-3-one (BIT)(PT6, 0.0001-0.05 (1-500 ppm)); 2-Octyl-2H-isothiazol-3-one (OIT)(PT6, 0.0001-0.5% (1-5000 ppm)); 2-butyl-benzo[d]isothiazol-3-one (BBIT)(PT6, 0.0001-0.5% (1-5000 ppm));
Amides/Ureas: Benzamide, 2,2'-dithiobis (DTBMA)(PT6, 0.0001-0.05% (1-500 ppm)), 2,2-dibromo-2-cyanoacetamide (DBNPA)(PT6, 0.0001-0.05% (1-500 ppm));
Pyrithiones: Zinc pyrithione (ZnPT)(PT6, 0.0001-0.05% (1-500 ppm)); Sodium pyrithione (NaPT)(PT6, 0.0001-0.05% (1-500 ppm));
Organohalogens: 2-Bromo-2-nitro-1,3-propanediol (Bronopol)(PT6, 0.001-0.05% (1-500 ppm);
Carbamates: 3-iodo-2-propynylbutylcarbamate (IPBC)(PT6, 0.01-0.5% (100-5000 ppm));
Silver chemistry: Reaction mass of titanium dioxide and silver chloride (PT6, 0.0001-0.5% (1-5000 ppm)); and
Formaldehyde donor/CH₂O adducts: N,N-Methylenebismorpholine (MBM)(PT6, 0.0001-0.5% (1-5000 ppm)); (ethylenedioxy)dimethanol (EDDM) (PT6, 0.0001-0.5% (1-5000 ppm)); α, α', α"-trimethyl-1,3,5-triazine-1,3,5(2H,4H,6H)-triethanol (HPT); 3,3'-methylenebis[5-methyloxazolidine] (Oxazolidin/MBO) (PT6, 0.0001-0.5% (1-5000 ppm)); Sodium N-(hydroxymethyl)glycinate; Tetrahydro-1,3,4,6-tetrakis(hydroxymethyl)imidazo[4,5-d]imidazole-2,5(1H,3H)-dione (TMAD)(PT6, 0.0001-0.5% (1-5000 ppm)); Tetrakis(hydroxymethyl)phosphonium sulphate(2:1) (THPS) (PT6, 0.0001-0.5% (1-5000 ppm)); Methenamine 3-chloroallylochloride (CTAC)(PT6, 0.0001-0.5% (1-5000 ppm)); 2,2',2"-(hexahydro-1,3,5-triazine-1,3,5-triyl)triethanol (HHT)(PT6, 0.0001-0.5% (1-5000 ppm)); 1,3-bis(hydroxymethyl)-5,5-dimethylimidazolidine-2,4-dione (DMDMH)(PT6, 0.0001-0.5% (1-5000 ppm)); 7a-ethyldihydro-1H,3H,5H-oxazolo[3,4-c]oxazole (EDHO)(PT6, 0.0001-0.5% (1-5000 ppm)); cis-1-(3-chloroallyl)-3,5,7-triaza-1-azoniaadamantanechloride (cis CTAC)(PT6, 0.0001-0.5% (1-5000 ppm)); (benzyloxy)methanol(PT6, 0.0001-0.5% (1-5000 ppm)).

Representative examples of suitable dry film biocides that may be present in the coating compositions of the present invention include:
Isothiazolines: 4,5-Dichlor-2-n-octyl-4-isotiazolin-3-one (DCOIT)(PT7, 0.05-0.2% (500-2000 ppm); 2-Octyl-2H-isothiazol-3-one (OIT)(PT7, 0.1-0.4% (1000-4000 ppm)); 2-butyl-benzo[d]isothiazol-3-one (BBIT)(PT7, 0.0001-0.5% (1-5000 ppm)); 2-thiazol-4-yl-1H-benzoimidazole (Thiabendazole)(PT7, 0.01-0.5% (100-5000 ppm));
Azoles: Methyl (E)-2-{2-[6-(2-cyanophenoxy)pyrimidin-4-yloxy]phenyl}-3-methoxyacrylate (Azoxystrobin)(PT7, 0.01-0.5% (100-5000 ppm)); 1-[[2-(2,4-dichlorophenyl)-4-propyl-1,3-dioxolan-2-yl]methyl]-1H-1,2,4-triazole (Propiconazole)(PT7, 0.01-0.5% (100-5000 ppm)); 1-(4-chlorophenyl)-4,4-dimethyl-3-(1,2,4-triazol-1-ylmethyl)pentan-3-ol (Tebuconazole)(PT7, 0.01-0.5% (100-5000 ppm));
Amides/Ureas: 3-(3,4-dichlorophenyl)-1,1-dimethylurea (Diuron)(PT7, 0.1-1.0% (1000-10,000 ppm)); 3-(4-Isopropylphenyl)-1,1-dimethylurea (Isoproturon)(PT7, 0.01-0.5% (100-5000 ppm))
Pyrithiones: Zinc pyrithione (ZnPT)(PT7, 0.0001-0.05% (1-500 ppm)); Sodium pyrithione (NaPT)(PT7, 0.0001-0.05% (1-500 ppm));
Organohalogens: 4-(2,2-difluoro-1,3-benzodioxol-4-yl)-1H-pyrrole-3-carbonitrile (Fludioxonil)(PT7, 0.01-0.5% (100-5000 ppm)); Dichloro-N-[(dimethylamino)sulphonyl] fluoro-N-(ptolyl)methanesulphenamide (Tolylfluanid)(PT8, 0.01-0.5% (100-5000 ppm));
Carbamates: 3-iodo-2-propynylbutylcarbamate (IPBC)(PT7, 0.05-0.5% (500-5000 ppm)); Methyl 2-benzimidazoie carbamate (Carbendazim)(PT7, 0.01-0.5% (100-5000 ppm))
Silver chemistry: Reaction mass of titanium dioxide and silver chloride (PT7, 0.0001-0.5% (1-5000 ppm)); Silver copper zeolite (PT7, 0.0001-0.5% (1-5000 ppm)); Silver nitrate (PT7, 0.0001-0.5% (1-5000 ppm)); Silver phosphate glass (PT7, 0.0001-0.5% (1-5000 ppm)); Silver sodium hydrogen zirconium phosphate (PT7, 0.0001-0.5% (1-5000 ppm)); Silver zeolite (PT7, 0.0001-0.5% (1-5000 ppm)); Silver zinc zeolite (PT7, 0.0001-0.5% (1-5000 ppm)); and
Triazines: (4E)-4-(Ethylimino)-N-(2-methyl-2-propanyl)-6-(methylsulfanyl)-1,4-dihydro-1,3,5-triazin-2-amine (Terbutryn)(PT7, 0.1-0.3% (1000-3000 ppm)).

Representative examples of suitable wood preservatives that may be present in the coating compositions of the present invention include:
Isothiazolines: 4,5-Dichlor-2-n-octyl-4-isotiazolin-3-one (DCOIT)(PT8, 0.01-0.5% (100-5000 ppm); 2-Octyl-2H-isothiazol-3-one (OIT)(PT8, 0.0001-0.5% (1-5000 ppm)); 2-thiazol-4-yl-1H-benzoimidazole (Thiabendazole)(PT8, 0.01-0.5% (100-5000 ppm));
Azoles: 1-[[2-(2,4-dichlorophenyl)-4-propyl-1,3-dioxolan-2-yl]methyl]-1H-1,2,4-triazole (Propiconazole)(PT8, 0.01-0.5% (100-5000 ppm)); 1-(4-chlorophenyl)-4,4-dimethyl-3-(1,2,4-triazol-1-ylmethyl)pentan-3-ol (Tebuconazole)(PT8, 0.01-0.5% (100-5000 ppm));
Organohalogens: Dichloro-N-[(dimethylamino)sulphonyl] fluoro-N-(ptolyl)methanesulphenamide (Tolylfluanid)(PT8, 0.01-0.5% (100-5000 ppm)); and
Carbamates: 3-iodo-2-propynylbutylcarbamate (IPBC)(PT8, 0.01-0.5% (100-5000 ppm)).

Preferably the total amount of biocide (in can, dry film and wood preservative) present in the compositions of the invention is 0.01-2.0 wt%, more preferably 0.05-1.5 wt% and still more preferably 0.1-1.0 wt%, based on the total weight of the composition. It should be understood that the optimal amount of biocide varies depending on which type and/or combination of biocide is employed.

### Organic solvent

The coating composition of the present invention optionally comprises an organic solvent. The solvent present may derive from components present in the composition that are provided in solvents and/or from solvent added into the composition. The solvent is preferably volatile. Suitable solvents present in the compositions of the invention are commercially available.

Examples of suitable organic solvents and thinners are aromatic hydrocarbons such as xylene, toluene, mesitylene; ketones such as methyl ethyl ketone, methyl isobutyl ketone, methyl amyl ketone, methyl isoamyl ketone, cyclopentanone, cyclohexanone; esters such as butyl acetate, tert-butyl acetate, amyl acetate, isoamyl acetate, ethylene glycol methyl ether acetate, diethylene glycol n-butyl ether acetate, propylene glycol methyl ether acetate; ethers such as dipropylene glycol butyl ether, dipropylene glycol propyl ether, propylene glycol propyl ether, propylene glycol butyl ether, ethylene glycol monobutyl ether, diethylene glycol monobutyl ether, ethylene glycol dimethyl ether, diethylene glycol dimethyl ether, dibutyl ether, dioxane, tetrahydrofuran; alcohols such as 1-propanol, 2-propanol, n-butanol, isobutanol, benzyl alcohol, propylene glycol; ether alcohols such as butoxyethanol, 1-methoxy-2-propanol; ester alcohols such as 2,2,4-trimethyl-1,3-pentanediol monoisobutyrate (texanol), aliphatic hydrocarbons such as white spirit; and optionally a mixture of two or more solvents and thinners.

If an organic solvent is present in the composition of the invention, the organic solvent is preferably selected from 2,2,4-trimethyl-1,3-pentanediol monoisobutyrate (texanol), diethylene glycol monobutyl ether, propylene glycol, dipropylene glycol butyl ether and mixtures thereof.

The amount of organic solvent present in the coating compositions of the present invention is preferably as low as possible as this minimizes the VOC content. Preferably organic solvent is present in the compositions of the invention in an amount of 0-20 wt%, more preferably 0-15 wt% and still more preferably 0.5-8 wt% based on the total weight of the composition. The skilled man will appreciate that the organic solvent content will vary depending on the other components present.

### Other binders

Additional binders may optionally be added to the coating compositions of the present invention. Examples of suitable binders include polyurethanes, silicone emulsions, fluoropolymers, polystyrene, polyvinyl (e.g. polyvinyl acetate) and polyolefins.

Preferably the total amount of other binders present in the compositions of the invention is 0-40 wt%, more preferably 0-35 wt% and still more preferably 0-30 wt%, based on the total weight of the composition.

### Additives

The coating composition of the present invention preferably comprises one or more other additives. Examples of other components that can be added to the coating composition are dispersing agent, foam control agent, neutralizing agent (e.g. ammonia, 2-aminopropanol), nanosilica particles, waxes, adhesion promotors, flash rust inhibitors, anticorrosion agents, wetting agents, reinforcing agents, thixotropic agents, fillers, anti-static agents, flame retardant agents, lubricants, anti-settling agents, and plasticizers.

Optionally the composition of the present invention comprises light stabilisers (e.g. hindered amine light stabilisers). Preferably, however, the composition does not comprise a hindered amine light stabiliser.

Optionally the composition of the present invention comprises UV absorbents, Preferably, however, the composition does not comprise a UV absorbent. Particularly preferably the composition does not comprise a hindered amine light stabiliser or a UV absorbent. Such components increase the cost of the composition and increase the tendency of coatings formed from the composition to pick up dirt.

Preferably the total amount of additives present in the compositions of the invention is an amount of 0-8.0 wt%, more preferably 0.5-7.0 wt% and still more preferably 1.0-6.0 wt%, based on the total weight of the composition.

### Composition

The following preferred compositions are subject to the requirement that the composition comprises:
(i) a poly(meth)acrylate dispersion comprising poly(meth)acrylate polymer particles having an average diameter of 50-400 nm, as determined by ISO 22412:2017;
(ii) solid organic filler particles, wherein said solid organic filler particles comprise poly(meth)acrylate, polystyrene, polyacrylamide, polyurethane, polysiloxane, polyolefin, polyacrylonitrile, nylon, poly(vinyl ester), and mixtures thereof, are substantially spherical, and have an average diameter of 10 to 30 µm, as determined by ISO 13320:2009;
(iii) pigment;
(iv) water; and
(v) a biocide selected from the group consisting of: in can preservatives, dry film biocides, wood preservatives, or mixtures thereof,
wherein said composition comprises less than 8 wt% inorganic extender, based on the total weight of the composition.

A preferred coating composition of the present invention comprises:
(i) 5-60 wt% of a poly(meth)acrylate dispersion;
(ii) 0.1-30 wt% solid organic filler particles, wherein said solid organic filler particles comprise poly(meth)acrylate, polystyrene, polyacrylamide, polyurethane, polysiloxane, polyolefin, polyacrylonitrile, nylon, poly(vinyl ester), and mixtures thereof;
(iii) 0.5-40 wt% pigment;
(iv) 20-90 wt% water;
(v) 0.05-5.0 wt% rheology modifier;
(vi) 0-20 wt% alkyd resin;
(vii) 0.01-1 wt% biocide;
(viii) 0-20 wt% organic solvent;
(ix) 0-8 wt% additive; and
(x) less than 8 wt% inorganic extender,
wherein wt% is based on the total weight of the composition.

A further preferred coating composition of the present invention comprises:
(i) 10-55 wt%, more preferably 15-40 wt%, of a poly(meth)acrylate dispersion;
(ii) 0.5-25 wt%, more preferably 1-20 wt%, solid organic filler particles, wherein said solid organic filler particles comprise poly(meth)acrylate, polystyrene, polyacrylamide, polyurethane, polysiloxane, polyolefin, polyacrylonitrile, nylon, poly(vinyl ester), and mixtures thereof;
(iii) 0.1-35 wt%, more preferably 2-30 wt%, pigment;
(iv) 30-90 wt%, more preferably 35-70 wt%, and yet more preferably 40-65 wt% water;
(v) 0.1-3.0 wt% rheology modifier;
(vi) 0.5-15 wt% alkyd resin, more preferably 1-10 wt% alkyd resin;
(vii) 0.05-1.5 wt% biocide, more preferably 0.1-1.0 wt% biocide;
(viii) 0-15 wt% organic solvent, more preferably 0.5-8.0 wt% organic solvent;
(ix) 0.5-7 wt% additive, more preferably 1.0-6.0 wt% additive; and
(x) preferably less than 5 wt% inorganic extender,
wherein wt% is based on the total weight of the composition.

Preferred compositions of the invention have a gloss of less than 60 at an angle of 60°, e.g. as tested by the method set out in the examples, when present as a coating on a surface.

Further preferred compositions of the invention have a difference in gloss of ±10 and more preferably ±5, when measured at angles of 60° and 85°, as set out in the examples, when present as a coating on a surface.

Preferred compositions of the invention have a volatile organic content (VOC) of less than 200 g/L, more preferably less than 150 g/L, most preferable less than 130 g/L. The VOC is calculated according to the VOC definition in EU directive 2004/42/EC.

### Manufacture and containers

The present invention also relates to a method of preparing the composition as hereinbefore described wherein the components present in the composition are mixed. Any conventional production method may be used.

The composition as described herein may be prepared in a suitable concentration for use, e.g. in brush or rolling application. Alternatively, the composition may be a concentrate. In this case, further solvent, typically water, is added to the composition described herein to form the final coating composition. After mixing, and optionally after addition of solvent, e.g. water, the coating composition is preferably filled into a container. Suitable containers include cans, drums and tanks.

The coating composition is preferably supplied as a one-pack. Thus the composition is preferably supplied in a ready-mixed or ready to use form. Optionally the one-pack product may be tinted with pigments prior to application.

### Coatings and Substrates

The coating composition of the invention may be applied to a whole or part of any surface or article. The coating composition of the invention advantageously improves the appearance of the surface. Preferred coatings of the invention have a gloss, as determined by the method set out in the examples, of less than 60, at an angle of 60°. Further preferred coatings of the invention have a difference in gloss, as determined by the method set out in the examples, of ±10 and more preferably ±5, when measured at angles of 60° and 85°. This ensures that the look of the coating is consistent, regardless of the viewing angle. Another advantage of the coating composition of the present invention is that it protects surfaces subject to degradation, e.g. by UV, water and/or biological agents such as mold or algae and retains the "new" or fresh look of the surface for a prolonged period of time.

Application of the coating composition may be accomplished by any convenient means, e.g. via painting with a brush or roller, onto the surface or article. Preferably therefore the method of providing a coating on a surface, comprises: (i) applying a composition as hereinbefore described; and drying the composition to form a coating on the surface. An advantage of the compositions of the present invention is that they are self-drying, i.e. they dry and/or cure at ambient conditions, typically from 0 - 40°C.

The coating composition, once dried, forms a coating or film. The coating or film of the present invention therefore comprises the composition as hereinbefore described but with little, or no, water content or solvent. Alternatively defined, the coating or film of the present invention is derived from or obtainable form (e.g. obtained from) the composition as hereinbefore defined by drying and/or curing. The coating or film formed, especially when the film is on wood, preferably has a dry film thickness per coat of 20-90 µm, more preferably 20-60 µm and still more preferably 30-50 µm.

Suitable substrates that may be coated with the coating composition herein described include wood, wooden based materials (e.g. MDF, chipboard) metal, stone, plastic, natural and synthetic fibres, glass, ceramics, plaster, concrete, leather, paper, foam or masonry. Preferably the substrate is wood or wooden based material.

The coating composition of the present invention is particularly suited for application to surfaces that are regularly exposed to an outdoor environment. Preferably, therefore, the coating composition of the invention is an exterior coating. Representative examples of surfaces or articles that may be coated with the coating composition described herein include exterior articles such as decking, fencing, wall and ceiling surfaces, house structures (e.g. door frames, window frames, exposed beams etc.), furniture (interior and exterior) and sheds.

The coating composition of the present invention is preferably applied in a coating system. A primer is preferably applied on the substrate. The coating composition according to the invention is preferably applied on top of the primer as one, two or three coats, preferably two coats.

The invention will now be described by the following non-limiting examples wherein:

### EXAMPLES

### Materials

The polymers and compounds used in the examples are all available commercially. These are summarised in the table below.

| Ingredient | Description | Solid content (wt%) |
|---|---|---|
| Poly(meth)acrylate dispersion I, MFFT ~14 °C, particle size 120 nm | Poly(meth)acrylate dispersion | 45-46 (in water) |
| Poly(meth)acrylate dispersion II, MFFT <0 °C, particle size 111 nm | Poly(meth)acrylate dispersion | 44-46 (in water) |
| Crosslinked monodispersed PMMA spherical particles (particle size: 20 µm, density: 1.2 g/cm³) | Solid organic filler | 100 |
| TiO₂ | Colour Pigment | 100 |
| Iron oxide red | Colour Pigment | 100 |
| Rheology modifiers | Mix of high, mid and low shear rheology modifiers | 22 (in water) |
| Texanol (cas 25265-77-4) | Solvent | Texanol (cas 25265-77-4) |
| | Film forming agent | |
| Biocides | Film preservative | 20 (in water) |
| Dispersing agent | Additive | 40 (in water) |
| Foam control agent | Additive | 100 |
| Inorganic extender (average particle size 10 µm) | Inorganic extender | 100 |

### General procedure for the preparation of coating compositions

The components of the coating compositions were mixed in the proportions set out in Tables 1-4 (parts by weight) below. Comparative examples lacking solid organic filler particles were also prepared.

The coating compositions were prepared using a dissolver. Titanium dioxide, and where appropriate inorganic extender, were dispersed in a mill base. The rest of the ingredients, including the binder were mixed in a let-down. Then the mill base and let-down were mixed. The solid organic filler particles were added at the end using low speed stirring. Water was included in the mill base, the let down and also added during the paint manufacturing process. Colour pigments were added as a pre-made pigment dispersion using Jotun Multi Color system. 1L of each composition was made.

The VOCs are calculated according to the VOC definition in EU directive 2004/42/EC.

### Test Methods

### • Outdoor exposure

A modified version of ISO 927-3 was used. Wooden panels made from Norwegian spruce were used (60 x 12 cm). The panels were primed using a standard waterborne alkyd primer (Jotun Visir Alkyd Primer). The primed panels were dried for at least 2 days at ambient temperature. Two coats of the paint compositions described in Tables 1-4 were applied. The panels were weighed to ensure proper film thickness (50 - 80 µm dry film thickness per coat). Between each coat, the samples were dried for approximately 24 hours at ambient temperature. The paint compositions were applied with a brush. The panels were exposed in Sandefjord Norway and were placed 45° south. An internal reference material was painted 1/3 on each of the panels. The internal reference is used to ensure that all substrates behave the same. The internal reference had the same gloss retention and dirt pick up on all panels which mean that all wooden panels behave the same.

### • Gloss and Colour measurements

Reduction in gloss is related to degradation of the paint caused by UV/VIS radiation and water. Change in colour for white paint is primarily related to dirt pick up whereas for red paint colour (or other colour) change is mainly related to degradation of the paint by UV/VIS radiation and water.

The gloss and colour of the dried coating films on the wooden panels were measured using a Sheen Spectromatch, using 45/0 geometry. The method and software provided by the manufacturer of the instrument were used for the measurements and calculations. The values measured at gloss angle 60° was used for the determination of gloss retention.

The starting values for gloss and colour were measured before the samples were put at the exposure site. After 6 months and 18 months the gloss was measured with the instrument at the exposure site. After 12 months the colour was measured with the instrument at the exposure site. The average value of three measurements was used for each of these calculations. To obtain gloss retention and colour change (ΔE) the software calculates the difference in gloss and colour before and after exposure.

### • Gloss measurements at various angles

The gloss at various angles was determined according to NS-EN ISO 2813. A handheld BYK - micro-tri-gloss instrument were used. The paint compositions were applied on glass panels with a 100 µm applicator and dried at ambient conditions for one week before the gloss was measured. Values for 60° and 85° are reported as an average of three measurements.

The results of testing are set out in Tables 1-4 below.

**Table 1**

| | Example 1 | Comparative Example 1 | Comparative Example 2 |
|---|---|---|---|
| Poly(meth)acrylate dispersion I | 74.3 | 66.0 | 83.4 |
| PMMA particles, organic filler | 5.0 | 0 | 0 |
| Iron oxide red | 3.0 | 3.0 | 3.0 |
| Water | 11.0 | 11.8 | 6.5 |
| Rheology modifiers | 3.18 | 2.85 | 3.61 |
| Dispersing agent | 0.14 | 0.42 | 0 |
| Foam control agent | 0.35 | 0.30 | 0.40 |
| Texanol | 2.8 | 2.5 | 3.1 |
| Biocides | 0.20 | 0.20 | 0.20 |
| Inorganic extender | 0 | 13.0 | 0 |
| Calculated wt% solid content | 41.1 | 45.4 | 40.2 |
| Calculated VOC (g/L) | 29 | 28 | 33 |
| | | | |
| Initial Gloss | 19 | 18 | 62 |
| Gloss retention at 6 months (%) | 73 | 76 | 88 |
| Gloss retention at 18 months (%) | 85 | 36 | 89 |
| Colour change ΔE at 12 months | 6.0 | 8.3 | 7.4 |

The results show that the presence of solid organic filler particles in coating compositions yields coatings with a desirable gloss level, high gloss retention and low dirt pick/colour change. This is clear, for instance, by comparing example 1 and comparative example 1 which have substantially identical compositions except that example 1 comprises solid organic filler particles and comparative example 1 lacks these particles and instead comprises inorganic extender. The two compositions produce coatings having similar gloss levels (19 and 18) and have similar gloss retention at 6 months (73 and 76 % respectively). Example 1, however, has significantly better gloss retention at 18 months (85 % vs 36 %) and a lower dirt pick up/colour change at 12 months (6 and 8.3 respectively) compared to comparative example 1. Comparative example 3 is a composition lacking solid organic filler particles. It has a high gloss level. This is because it does not comprise solid organic filler particles or inorganic extender. Comparative example 3 has good gloss retention and dirt pick up/colour change suggesting it is the addition of compounds to reduce gloss levels that causes instability and dirt pick up/colour change.

**Table 2**

| | Example 2 | Comparative Example 3 | Comparative Example 4 |
|---|---|---|---|
| Poly(meth)acrylate dispersion II | 71.1 | 62.1 | 80.5 |
| PMMA particles, organic filler | 5.0 | 0 | 0 |
| Iron oxide red | 3.0 | 3.0 | 3.0 |
| Water | 17.6 | 18.3 | 12.4 |
| Rheology modifiers | 2.58 | 2.74 | 2.91 |
| Dispersing agent | 0.14 | 0.41 | 0 |
| Foam control agent | 0.35 | 0.34 | 0.40 |
| Texanol | 0.34 | 0.30 | 0.40 |
| Biocides | 0.20 | 0.20 | 0.20 |
| Inorganic extender | 0 | 12.5 | 0 |
| Calculated wt% solid content | 38.7 | 42.6 | 38.3 |
| Calculated VOC (g/L) | 4 | 3 | 4 |
| | | | |
| Initial Gloss | 16 | 17 | 61 |
| Gloss retention at 6 months (%) | 125 | 70 | 88 |
| Gloss retention at 18 months (%) | 118 | 56 | 87 |
| Colour change ΔE at 12 months | 4.1 | 6.7 | 5.8 |

This coating comprises a different poly(meth)acrylate dispersion to the coating in Table 2 but the results show the same pattern as those in Table 1 above. They show that the presence of solid organic filler particles in coating compositions yields coatings with a desirable gloss level, high gloss retention and low dirt pick/colour change. The composition of example 2 in this case performs even better than the high gloss composition lacking both solid organic filler particles and inorganic extender.

**Table 3**

| | Example 3 | Comparative example 5 |
|---|---|---|
| Poly(meth)acrylate dispersion II | 54.3 | 51.6 |
| PMMA particles, organic filler | 4.8 | 0 |
| TiO₂ | 18.6 | 19.0 |
| Water | 19.0 | 17.0 |
| Rheology modifiers | 1.73 | 1.71 |
| Dispersing agent | 0.67 | 0.80 |
| Foam control agent | 0.41 | 0.42 |
| Texanol | 0.26 | 0.24 |
| Biocides | 0.21 | 0.21 |
| Inorganic extender | 0 | 9.0 |
| Calculated wt% solid content | 50.1 | 52.7 |
| Calculated VOC (g/L) | 3 | 3 |
| | | |
| Initial Gloss | 16 | 22 |
| Gloss retention at 6 months (%) | 100 | 75 |
| Gloss retention at 18 months (%) | 87 | 69 |
| Colour change ΔE at 12 months | 1.6 | 2.7 |

These results are for coating compositions comprising TiO₂ colour pigment and which therefore produce white coatings. As for the coloured coatings described above, gloss retention is still high. Additionally dirt pick up/colour change, which is exacerbated with white coatings, is better with example 3 comprising solid organic filler particles than with comparative example 5 which lacks solid organic filler particles and contains inorganic extender.

**Table 4**

| | Example 4 | Example 5 | Comparative example 6 |
|---|---|---|---|
| Poly(meth)acrylate dispersion II | 74.0 | 65.0 | 62.0 |
| PMMA particles, organic filler | 10.0 | 20.0 | 0 |
| Iron oxide red | 3.0 | 3.0 | 3.0 |
| Water | 9.7 | 8.5 | 16.0 |
| Rheology modifiers | 2.73 | 2.91 | 2.48 |
| Dispersing agent | 0 | 0 | 0.40 |
| Foam control agent | 0.30 | 0.40 | 0.35 |
| Texanol | 0.30 | 0.40 | 0.34 |
| Biocides | 0.20 | 0.20 | 0.20 |
| Inorganic extender | 0 | 0 | 15.0 |
| Calculated wt% solid content | 43.7 | 49.8 | 45.4 |
| Calculated VOC (g/L) | 3 | 4 | 3 |
| | | | |
| Gloss at 60° | 12 | 3 | 12 |
| Gloss at 85° | 14 | 4 | 28 |

Examples 4 and 5 are coating compositions comprising 10 wt% and 20 wt% solid organic filler particles (whereas the examples above contained 5 wt% solid organic filler particles. Comparative example 6 lacks solid organic filler particles and instead comprises inorganic extender. The results show that the presence of solid organic filler particles in coating compositions yields coatings with a desirable gloss level and which look virtually the same, i.e. are equally glossy, from different viewing directions. This is required for the coating to look "new" for a prolonged period of time. In contrast the composition of comparative example 6 shows much greater variation in the gloss level achieved in the two directions tested. Thus another advantage of the compositions of the invention, in addition to desirable gloss level, gloss retention and low dirt pick up/colour change, is that the coatings produced have consistent gloss levels from different viewing angles.

## Claims

1. A coating composition comprising:
(i) a poly(meth)acrylate dispersion comprising poly(meth)acrylate polymer particles having an average diameter of 50-400 nm, as determined by ISO 22412:2017;
(ii) solid organic filler particles, wherein said solid organic filler particles comprise poly(meth)acrylate, polystyrene, polyacrylamide, polyurethane, polysiloxane, polyolefin, polyacrylonitrile, nylon, poly(vinyl ester), and mixtures thereof, are substantially spherical, and have an average diameter of 10 to 30 µm, as determined by ISO 13320:2009;
(iii) pigment;
(iv) water; and
(v) a biocide selected from the group consisting of: in can preservatives, dry film biocides, wood preservatives, or mixtures thereof,
wherein said composition comprises less than 8 wt% inorganic extender, based on the total weight of the composition.

2. A composition as claimed in claim 1, wherein said biocide is selected from the group consisting of: in can preservatives, dry film biocides, or mixtures thereof.

3. A composition as claimed in claim 1 or 2, wherein said poly(meth)acrylate dispersion comprises a (meth)acrylate polymer having a Tg of -5 to 40 °C as determined by ASTM E 1356-08(2014) and/or a minimal film formation temperature (MFFT) of less than 40 °C, as determined by ASTM D2354-10e1.

4. A composition as claimed in any preceding claim, wherein said poly(meth)acrylate dispersion comprises a (meth)acrylate polymer comprising a residue of at least onemonomer of formula (I): 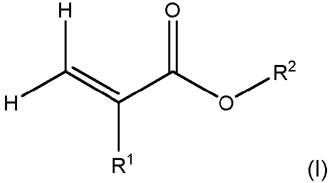
R¹ is H or CH₃;
R² is H or optionally substituted C₁₋₁₈ alkyl, wherein said substituents are selected from OH and OR³; and
R³ is selected from C₁₋₈ alkyl and C₃₋₈ cycloalkyl.

5. A composition as claimed in any preceding claim, wherein the amount of said poly(meth)acrylate dispersion present in the composition is 5-60 wt%, based on the total weight of dry polymer present in the composition.

6. A composition as claimed in any preceding claim, wherein said solid organic filler particles have a density of 0.9-1.3 gcm⁻³.

7. A composition as claimed in any preceding claim, wherein said solid organic filler particles comprise, preferably consist of, poly(meth)acrylate, preferably poly alkyl (meth)acrylate, e.g. polymethyl methacrylate (PMMA).

8. A composition as claimed in any preceding claim, wherein the amount of said solid organic filler particles present in said composition is 0.1-30 wt%, based on the total weight of the composition.

9. A composition as claimed in any preceding claim, wherein said solid organic filler particles have a polydispersity of less than 5 %.

10. A composition as claimed in any preceding claim, further comprising one or more rheology modifiers, at least one alkyd resin, a biocide, an organic solvent and/or additives.

11. A method for preparing a composition as claimed in any one of claims 1 to 10, comprising mixing:
(i) a poly(meth)acrylate dispersion comprising poly(meth)acrylate polymer particles having an average diameter of 50-400 nm, as determined by ISO 22412:2017;
(ii) solid organic filler particles, wherein said solid organic filler particles comprise poly(meth)acrylate, polystyrene, polyacrylamide, polyurethane, polysiloxane, polyolefin, polyacrylonitrile, nylon, poly(vinyl ester), and mixtures thereof, are substantially spherical, and have an average diameter of 10 to 30 µm, as determined by ISO 13320:2009;
(iii) pigment;
(iv) water; and
(v) a biocide selected from the group consisting of: in can preservatives, dry film biocides, wood preservatives, or mixtures thereof.

12. A container containing a composition as claimed in any one of claims 1 to 10.

13. A method of providing a coating on a surface, wherein said method comprises:
(i) applying a composition as claimed in any one of claims 1 to 10; and
(ii) drying said composition to form a coating on the surface.

14. A coating on a surface, wherein said coating is formed from a composition as claimed in any one of claims 1 to 10.

15. Use of a composition as claimed in any one of claims 1 to 10 to form a coating on at least one surface of an article.

## Patentansprüche

1. Beschichtungszusammensetzung umfassend:
(i) eine Poly(meth)acrylatdispersion umfassend Poly(meth)acrylatpolymerteilchen, die einen durchschnittlichen Durchmesser von 50-400 nm, wie durch ISO 22412:2017 bestimmt, aufweisen;
(ii) feste organische Füllstoffteilchen, wobei die festen organischen Füllstoffteilchen Poly(meth)acrylat, Polystyrol, Polyacrylamid, Polyurethan, Polysiloxan, Polyolefin, Polyacrylnitril, Nylon, Poly(vinylester) und Mischungen davon umfassen, im Wesentlichen kugelförmig sind und einen durchschnittlichen Durchmesser von 10 bis 30 µm, wie durch ISO 13320:2009 bestimmt, aufweisen;
(iii) Pigment;
(iv) Wasser; und
(v) ein Biozid ausgewählt aus der Gruppe bestehend aus: Konservierungsmitteln in der Dose, Trockenfilmbioziden, Holzschutzmitteln oder Mischungen davon,
wobei die Zusammensetzung weniger als 8 Gew.-% anorganische Streckmittel, auf das Gesamtgewicht der Zusammensetzung bezogen, umfasst.

2. Zusammensetzung nach Anspruch 1, wobei das Biozid aus der Gruppe ausgewählt wird bestehend aus: Konservierungsmitteln in der Dose, Trockenfilmbioziden oder Mischungen davon.

3. Zusammensetzung nach Anspruch 1 oder 2, wobei die Poly(meth)acrylatdispersion ein (Meth)acrylatpolymer umfasst, das eine Tg von -5 bis 40 °C, wie durch ASTM E 1356-08(2014) bestimmt, und/oder eine minimale Filmbildungstemperatur (MFFT) von weniger als 40 °C, wie durch ASTM D2354-10e1 bestimmt, aufweist.

4. Zusammensetzung nach einem der vorhergehenden Ansprüche, wobei die Poly(meth)acrylatdispersion ein (Meth)acrylatpolymer umfasst, das einen Rest von mindestens einem Monomer der Formel (I) umfasst: 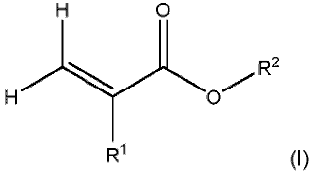
R₁ H oder CH₃ ist;
R² H oder wahlweise substituiertes C₁₋₁₈-Alkyl ist, wobei die Substituenten unter OH und OR³ ausgewählt sind; und
R³ unter C₁₋₈-Alkyl und C₃₋₈-Cycloalkyl ausgewählt ist.

5. Zusammensetzung nach einem der vorhergehenden Ansprüche, wobei die Menge der Poly(meth)acrylatdispersion, die in der Zusammensetzung vorliegt, 5-60 Gew.-%, auf das Gesamtgewicht von trockenem Polymer, das in der Zusammensetzung vorliegt, bezogen, beträgt.

6. Zusammensetzung nach einem der vorhergehenden Ansprüche, wobei die festen organischen Füllstoffteilchen eine Dichte von 0,9-1,3 gcm⁻³ aufweisen.

7. Zusammensetzung nach einem der vorhergehenden Ansprüche, wobei die festen organischen Füllstoffteichen Poly(meth)acrylat, bevorzugt Polyalkyl(meth)acrylat, z. B. Polymethylmethacrylat (PMMA) umfassen, bevorzugt daraus bestehen.

8. Zusammensetzung nach einem der vorhergehenden Ansprüche, wobei die Menge der festen organischen Füllstoffteilchen, die in der Zusammensetzung vorliegen, 0,1-30 Gew.-%, auf das Gesamtgewicht der Zusammensetzung bezogen, beträgt.

9. Zusammensetzung nach einem der vorhergehenden Ansprüche, wobei die festen organischen Füllstoffteilchen eine Polydispersität von weniger als 5 % aufweisen.

10. Zusammensetzung nach einem der vorhergehenden Ansprüche, ferner einen oder mehrere Rheologiemodifiziermittel, mindestens ein Alkydharz, ein Biozid, ein organisches Lösungsmittel und/oder Zusatzmittel umfassend.

11. Verfahren für die Herstellung einer Zusammensetzung nach einem der Ansprüche 1 bis 10, umfassend Mischen:
(i) einer Poly(meth)acrylatdispersion umfassend Poly(meth)acrylatpolymerteilchen, die einen durchschnittlichen Durchmesser von 50-400 nm, wie durch ISO 22412:2017 bestimmt, aufweisen;
(ii) fester organischer Füllstoffteilchen, wobei die festen organischen Füllstoffteilchen Poly(meth)acrylat, Polystyrol, Polyacrylamid, Polyurethan, Polysiloxan, Polyolefin, Polyacrylnitril, Nylon, Poly(vinylester) und Mischungen davon umfassen, im Wesentlichen kugelförmig sind und einen durchschnittlichen Durchmesser von 10 bis 30 µm, wie durch ISO 13320:2009 bestimmt, aufweisen;
(iii) Pigment;
(iv) Wasser; und
(v) eines Biozids ausgewählt aus der Gruppe bestehend aus: Konservierungsmitteln in der Dose, Trockenfilmbioziden, Holzschutzmitteln oder Mischungen davon,

12. Behälter enthaltend eine Zusammensetzung nach einem der Ansprüche 1 bis 10.

13. Verfahren für die Bereitstellung einer Beschichtung auf einer Oberfläche, wobei das Verfahren Folgendes umfasst:
(i) Aufbringen einer Zusammensetzung nach einem der Ansprüche 1 bis 10; und
(ii) Trocknen der Zusammensetzung, um eine Beschichtung auf der Oberfläche zu bilden.

14. Beschichtung auf einer Oberfläche, wobei die Beschichtung aus einer Zusammensetzung nach einem der Ansprüche 1 bis 10 gebildet wird.

15. Verwendung einer Zusammensetzung nach einem der Ansprüche 1 bis 10, um eine Beschichtung auf mindestens einer Oberfläche eines Artikels zu bilden.

## Revendications

1. Composition de revêtement comprenant :
(i) une dispersion de poly(méth)acrylate comprenant des particules de polymère de poly(méth)acrylate présentant un diamètre moyen de 50-400 nm, comme déterminé par la norme ISO 22412:2017 ;
(ii) des particules de charge organique solides, dans laquelle lesdites particules de charge organiques solides comprennent du poly(méth)acrylate, du polystyrène, du polyacrylamide, du polyuréthane, du polysiloxane, de la polyoléfine, du polyacrylonitrile, du nylon, du poly(vinyl ester), et des mélanges de ceux-ci, sont sensiblement sphériques, et présentent un diamètre moyen de 10 à 30 µm, comme déterminé par la norme ISO 13320:2009 ;
(iii) un pigment ;
(iv) de l'eau ; et
(v) un biocide sélectionné dans le groupe constitué de : conservateurs en boîte, biocides à film sec, conservateurs de bois, ou des mélanges de ceux-ci,
ladite composition comprenant moins de 8 % en poids d'agent de développement inorganique, sur la base du poids total de la composition.

2. Composition selon la revendication 1, dans laquelle ledit biocide est sélectionné dans le groupe constitué de : conservateurs en boîte, biocides à film sec ou des mélanges de ceux-ci.

3. Composition selon la revendication 1 ou la revendication 2, ladite dispersion de poly(méth)acrylate comprenant un polymère de (méth)acrylate présentant un Tg de -5 à 40 °C comme déterminé par la norme ASTM E 1356-08(2014) et/ou une température de formation de film minime (MFFT) de moins de 40 °C, comme déterminé par la norme ASTM D2354-10e1.

4. Composition selon l'une quelconque des revendications précédentes, ladite dispersion de poly(méth)acrylate comprenant un polymère de (méth)acrylate comprenant un résidu d'au moins un monomère de formule (I) : 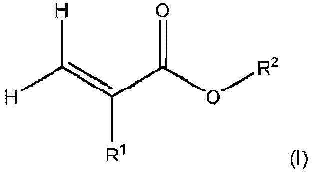
R₁ est un H ou CH₃ ;
R² est un H ou un alkyle en C₁₋₁₈ optionnellement substitué, dans lequel lesdits substituants sont sélectionnés parmi OH et OR³ ; et
R³ est sélectionné parmi un alkyle en C₁₋₈ et un cycloalkyle en C₃₋₈.

5. Composition selon l'une quelconque des revendications précédentes, la quantité de ladite dispersion de poly(méth)acrylate présente dans la composition étant de 5-60 % en poids sur la base du poids total du polymère sec présent dans la composition.

6. Composition selon l'une quelconque des revendications précédentes, lesdites particules de charge organique solides présentant une densité de 0,9-1,3 gcm⁻³.

7. Composition selon l'une quelconque des revendications précédentes, lesdites particules de charge organique solides comprenant, de préférence étant constituées de, poly(méth)acrylate, de préférence de polyalkyl(méth)acrylate, par exemple un polyméthylméthacrylate (PMMA).

8. Composition selon l'une quelconque des revendications précédentes, la quantité desdites particules de charge organique solides présentes dans ladite composition étant de 0,1-30 % en poids, sur la base du poids total de la composition.

9. Composition selon l'une quelconque des revendications précédentes, lesdites particules de charge organique solides présentant une polydispersité inférieure à 5 %.

10. Composition selon l'une quelconque des revendications précédentes, comprenant en outre un ou plusieurs modificateurs de rhéologie, au moins une résine alkyde, un biocide, un solvant organique et/ou des additifs.

11. Procédé de préparation d'une composition selon l'une quelconque des revendications 1 à 10, comprenant le mélange :
(i) d'une dispersion de poly(méth)acrylate comprenant des particules de polymère de poly(méth)acrylate présentant un diamètre moyen de 50-400 nm, comme déterminé par la norme ISO 22412:2017 ;
(ii) de particules de charge organique solides, dans laquelle lesdites particules de charge organique solides comprennent du poly(méth)acrylate, du polystyrène, du polyacrylamide, du polyuréthane, du polysiloxane, une polyoléfine, du polyacrylonitrile, du nylon, du poly(vinyl ester), et des mélanges de ceux-ci, sont sensiblement sphériques, et présentent un diamètre moyen de 10 à 30 µm, comme déterminé par la norme ISO 13320:2009 ;
(iii) d'un pigment ;
(iv) d'eau ; et
(v) d'un biocide sélectionné dans le groupe constitué de : conservateurs en boîte, biocides à film sec, conservateurs de bois ou mélanges de ceux-ci.

12. Récipient contenant une composition selon l'une quelconque des revendications 1 à 10.

13. Procédé de fourniture d'un revêtement sur une surface, ledit procédé comprenant :
(i) l'application d'une composition selon l'une quelconque des revendications 1 à 10 ; et
(ii) le séchage de ladite composition pour former un revêtement sur la surface.

14. Revêtement sur une surface, ledit revêtement étant formé à partir d'une composition selon l'une quelconque des revendications 1 à 10.

15. Utilisation d'une composition selon l'une quelconque des revendications 1 à 10, pour former un revêtement sur au moins une surface d'un article.
